# EUROPEAN PATENT APPLICATION

(11) **EP 3 270 300 A1**
(43) Date of publication of application: **17.01.2018**
(21) Application number: 16865525.6
(22) Date of filing: 29.06.2016
(51) Int. Cl.: G06F 17/30

(54) **METHOD AND DEVICE FOR FORM VERIFICATION**

(30) Priority: 20.11.2015 CN 201510810602
(71) Applicant: Huawei Technologies Co., Ltd., Longgang District Shenzhen, Guangdong 518129 (CN)
(72) Inventor: ZHAO, Weikai, Shenzhen Guangdong 518129 (CN); XU, Xiaoyan, Shenzhen Guangdong 518129 (CN); WEI, Ke, Shenzhen Guangdong 518129 (CN); LIU, Zhaoqiang, Shenzhen Guangdong 518129 (CN)
(74) Representative: Körber, Martin Hans
(86) International application number: PCT/CN2016/087700
(87) International publication number: WO 2017/084345

(57) **Abstract**

Embodiments of the present invention relate to the field of communications technologies, and in particular, to a form checking method and apparatus, so as to improve form filling efficiency. In the embodiments of the present invention, a first input box in a form is monitored. When it is detected that an operation action changing content in the first input box occurs in the first input box, a callback function that corresponds to a trigger event corresponding to the first input box is invoked, and the content in the first input box is checked according to a first check rule corresponding to the first input box. Prompt information corresponding to the first input box is displayed on a form page. When a submit command for submitting the form is received, content in each input box in the form and a check result that is obtained by checking each input box according to a second check rule corresponding to the input box are obtained. The form is processed according to the check result obtained by checking each input box. In this way, form filling efficiency is improved, and a time for filling in a form by a user is reduced.

## Description

This application claims priority to Chinese Patent Application No. 201510810602.8, filed with the Chinese Patent Office on November 20, 2015 and entitled "FORM CHECKING METHOD AND APPARATUS", which is incorporated herein by reference in its entirety.

### TECHNICAL FIELD

Embodiments of the present invention relate to the communications field, and in particular, to a form checking method and apparatus.

### BACKGROUND

Currently, in various form usage scenarios such as Weibo registration, email address registration, or a merchant center, a user needs to submit various information to a corresponding server by using a form displayed in a browser. The form includes one or more input boxes or selection boxes. The browser needs to check the information submitted by the user in the form, to determine whether the submitted information meets a requirement.

During the check for the information in the form, the browser needs to determine whether each field in the information complies with a preset rule, for example, whether a user name already exists, or whether a format of an email address is correct, and provides corresponding prompt information according to a result of the check.

In the prior art, there are two form checking manners. In a manner 1, after a user fills in an entire form and clicks Submit, information in the form is checked. In a manner 2, for each input box in a form, when the input box changes from an input state to a non-input state, that is, when an input focus leaves the input box, information in the input box is checked. After the check completes, if the information in the form does not comply with a preset rule, prompt information indicating an incorrect input is provided. If the information in the form complies with the preset rule, prompt information indicating a correct input is provided.

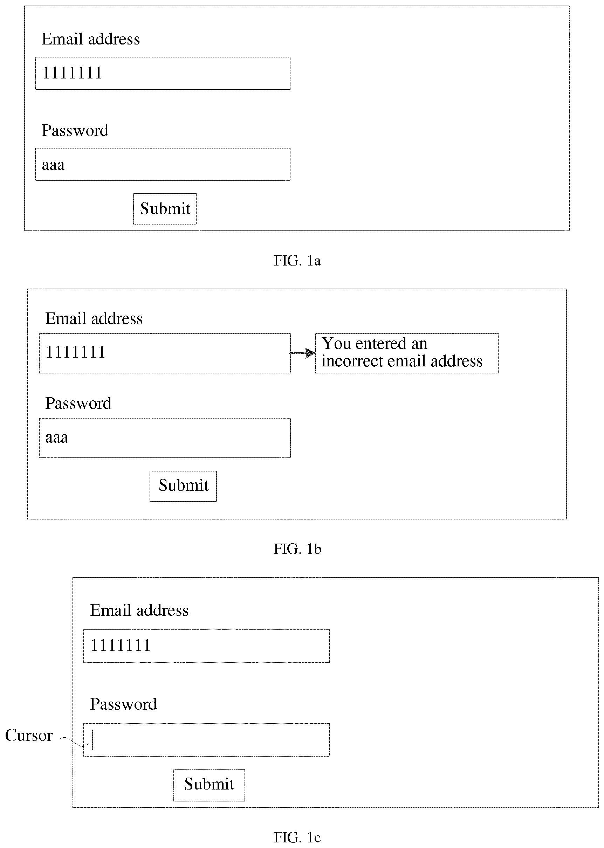

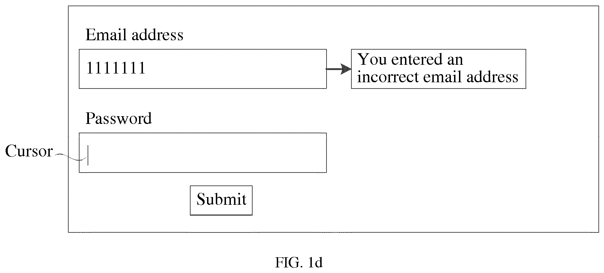

In the manner 1, FIG. 1a is a schematic diagram of a complete form filled in by a user in a method in which checking is performed after the user fills in the entire form. In FIG. 1a, the user enters "1111111" into an email address input box, enters "aaa" into a password input box, and then clicks a Submit button in FIG. 1a. FIG. 1b is a schematic diagram of FIG. 1a after the check. As shown in FIG. 1b, "You entered an incorrect email address" is prompted next to the email address input box. In this case, the user needs to return to the email address input box, reenter an email address, and re-click the Submit button, and then checking is performed again.

In the manner 2, FIG. 1c is a schematic diagram of filling in a form in a method for checking an input box when an input focus leaves the input box. As shown in FIG. 1c, a user enters information "1111111" into an email address input box. However, after the user completes entering content into the email address input box and begins to click a password input box next, there is a cursor in the password input box, as shown in FIG. Id. That is, the input focus leaves the email address input box, and checking the information in the email address input box begins. FIG. Id is a schematic diagram of FIG. 1c after the check. As shown in FIG. Id, when the input focus leaves the input box, an incorrect input of the email address is prompted. In this case, the user returns to the email address input box and enters information. After the input focus leaves the email address input box, the information in the email address input box is rechecked.

It can be seen that, in the manner 1 and the manner 2, when checking is unsuccessful, a user needs to return to an input box in which an error occurs, to enter information. This increases a quantity of times of filling in the input box by the user and wastes the user's time.

In conclusion, a form checking method and apparatus are urgently needed, to reduce a time for filling in a form by a user, and improve form filling efficiency.

### SUMMARY

Embodiments of the present invention provide a form checking method and apparatus, to reduce a time for filling in a form by a user, and improve form filling efficiency.

An embodiment of the present invention provides a form checking method, including the following steps:
monitoring a first input box in a form, where the first input box is an input box in the form;
when it is detected that an operation action changing content in the first input box occurs in the first input box, triggering a preset trigger event corresponding to the first input box;
invoking a callback function that corresponds to the trigger event corresponding to the first input box, and checking the content in the first input box according to a first check rule corresponding to the first input box; and displaying, on a form page according to a result of the checking the content in the first input box, prompt information corresponding to the first input box; and
when a submit command for submitting the form is received, obtaining content in each input box in the form and a check result that is obtained by checking each input box according to a second check rule corresponding to the input box; and processing the form according to the check result obtained by checking each input box.

In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

In a specific implementation, one form includes multiple input boxes. Therefore, for a second input box different from the first input box, optionally, the second input box in the form is monitored. The second input box is an input box in the form. The first input box and the second input box are different input boxes. When it is detected that an input focus leaves the second input box, a preset trigger event corresponding to the second input box is triggered. A callback function that corresponds to the trigger event corresponding to the second input box is invoked. Content in the second input box is checked according to a third check rule corresponding to the second input box. Prompt information corresponding to the second input box is displayed on the form page according to a result of the checking the content in the second input box. In this way, different checking methods may be selectively used for an input box in a form, improving form checking flexibility.

Optionally, the first check rule is used to check any one or more of a character type, a character length, or a format of the content in the first input box; the second check rule is used to check validity of the content in each input box in the form; and the third check rule is used to check any one or more of a character type, a character length, or a format of the content in the second input box.

Optionally, a first check is specifically: checking the content in the first input box by using a plug-in that is preset in a browser and that is corresponding to the form; a second check is specifically: sending the content in each input box in the form to a server, so that the server checks the validity of the content in each input box; and a third check is specifically: checking the content in the second input box by using the plug-in that is preset in the browser and that is corresponding to the form.

In this way, content such as a character type, a character length, or a format can be quickly checked, and the validity of the content in each input box in the form is then checked after the form is submitted, thereby improving form checking efficiency.

Optionally, the invoking a callback function that corresponds to the trigger event corresponding to the first input box, and checking the content in the first input box according to a first check rule corresponding to the first input box specifically includes:
when the first check rule is used to check the character type of the content in the first input box, invoking the callback function that corresponds to the trigger event triggered by the first input box, and checking the content in the first input box according to the first check rule corresponding to the first input box; and when it is determined that the character type of the content in the first input box belongs to any one or more of preset character types, determining that the checking the character type of the content in the first input box succeeds; otherwise, determining that the checking the character type of the content in the first input box fails;
when the first check rule is used to check the character length of the content in the first input box, invoking the callback function that corresponds to the trigger event triggered by the first input box, and checking the content in the first input box according to the first check rule corresponding to the first input box; and when it is determined that the character length of the content in the first input box does not exceed a preset character length, determining that the checking the character length of the content in the first input box succeeds; otherwise, determining that the checking the character length of the content in the first input box fails; and
when the first check rule is used to check the format of the content in the first input box, invoking the callback function that corresponds to the trigger event triggered by the first input box, and checking the content in the first input box according to the first check rule corresponding to the first input box; and when it is determined that the format of the content in the first input box matches a preset format, determining that the checking the format of the content in the first input box succeeds; otherwise, determining that the checking the format of the content in the first input box fails.

Optionally, the displaying, on a form page according to a result of the checking the content in the first input box, prompt information corresponding to the first input box specifically includes:
when it is determined that the checking the character type of the content in the first input box succeeds, displaying, on the form page, prompt information used to indicate that the checking the character type of the content in the first input box succeeds; or when it is determined that the checking the character type of the content in the first input box fails, displaying, on the form page, prompt information used to indicate that the checking the character type of the content in the first input box fails;
when it is determined that the checking the character length of the content in the first input box succeeds, displaying, on the form page, prompt information used to indicate that the checking the character length of the content in the first input box succeeds; or when it is determined that the checking the character length of the content in the first input box fails, displaying, on the form page, prompt information used to indicate that the checking the character length of the content in the first input box fails; and
when it is determined that the format of the content in the first input box is the preset format, displaying, on the form page, prompt information used to indicate that the format of the content in the first input box is the preset format; or when it is determined that the format of the content in the first input box is not the preset format, displaying, on the form page, prompt information used to indicate that the format of the content in the first input box is not the preset format.

In this way, a user can clearly know, from a form filling screen, why content entered by the user into the input box does not meet a requirement. Therefore, the user can modify the content in the input box in a more targeted manner, improving the correct input box filling efficiency of the user.

Optionally, the operation action changing the content in the first input box specifically refers to any one of the following content: entering content into the input box, deleting content in the input box, cutting content in the input box, or pasting content into the input box. In this way, the input box is not checked when an operation action not changing the content in the input box is detected. This simplifies a processing procedure, reduces network overheads, and saves network resources.

An embodiment of the present invention provides a form checking apparatus, including:
a monitoring unit, configured to: monitor a first input box in a form, where the first input box is an input box in the form; and when it is detected that an operation action changing content in the first input box occurs in the first input box, trigger a preset trigger event corresponding to the first input box;
a check unit, configured to: invoke a callback function that corresponds to the trigger event corresponding to the first input box, and check the content in the first input box according to a first check rule corresponding to the first input box;
a display unit, configured to display, on a form page according to a result of the checking the content in the first input box, prompt information corresponding to the first input box; and
a processing unit, configured to: when a submit command for submitting the form is received, obtain content in each input box in the form and a check result that is obtained by checking each input box according to a second check rule corresponding to the input box; and process the form according to the check result obtained by checking each input box.

In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

In a specific implementation, one form includes multiple input boxes. Therefore, for a second input box different from the first input box, optionally, the second input box in the form is monitored. The second input box is an input box in the form. The first input box and the second input box are different input boxes. When it is detected that an input focus leaves the second input box, a preset trigger event corresponding to the second input box is triggered. A callback function that corresponds to the trigger event corresponding to the second input box is invoked. Content in the second input box is checked according to a third check rule corresponding to the second input box. Prompt information corresponding to the second input box is displayed on the form page according to a result of the checking the content in the second input box. In this way, different checking methods may be selectively used for an input box in a form, improving form checking flexibility.

Optionally, the monitoring unit is further configured to:
monitor a second input box in the form, where the second input box is an input box in the form, and the first input box and the second input box are different input boxes; and when detecting that an input focus leaves the second input box, trigger a preset trigger event corresponding to the second input box;
the check unit is further configured to:
   invoke a callback function that corresponds to the trigger event corresponding to the second input box, and check content in the second input box according to a third check rule corresponding to the second input box; and
   the display unit is further configured to:
      display, on the form page according to a result of the checking the content in the second input box, prompt information corresponding to the second input box.

Optionally, the first check rule is used to check any one or more of a character type, a character length, or a format of the content in the first input box;
the second check rule is used to check validity of the content in each input box in the form; and
the third check rule is used to check any one or more of a character type, a character length, or a format of the content in the second input box.

Optionally, a first check is specifically: checking the content in the first input box by using a plug-in that is preset in a browser and that is corresponding to the form;
a second check is specifically: sending the content in each input box in the form to a server, so that the server checks the validity of the content in each input box; and
a third check is specifically: checking the content in the second input box by using the plug-in that is preset in the browser and that is corresponding to the form.

In this way, content such as a character type, a character length, or a format can be quickly checked, and the validity of the content in each input box in the form is then checked after the form is submitted, thereby improving form checking efficiency.

Optionally, the check unit is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed a preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

In this way, a user can clearly know, from a form filling screen, why content entered by the user into the input box does not meet a requirement. Therefore, the user can modify the content in the input box in a more targeted manner, improving the correct input box filling efficiency of the user.

Optionally, the display unit is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

Optionally, the operation action changing the content in the first input box specifically refers to any one of the following content:
entering content into the input box, deleting content in the input box, cutting content in the input box, or pasting content into the input box.

An embodiment of the present invention provides a form checking apparatus, including:
a processor, configured to:
   monitor a first input box in a form, where the first input box is an input box in the form; and when it is detected that an operation action changing content in the first input box occurs in the first input box, trigger a preset trigger event corresponding to the first input box;
   invoke a callback function that corresponds to the trigger event corresponding to the first input box, and check the content in the first input box according to a first check rule corresponding to the first input box;
   display, on a form page according to a result of the checking the content in the first input box, prompt information corresponding to the first input box; and
   when a submit command for submitting the form is received, obtain content in each input box in the form and a check result that is obtained by checking each input box according to a second check rule corresponding to the input box; and process the form according to the check result obtained by checking each input box.

In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

In a specific implementation, one form includes multiple input boxes. Therefore, for a second input box different from the first input box, optionally, the second input box in the form is monitored. The second input box is an input box in the form. The first input box and the second input box are different input boxes. When it is detected that an input focus leaves the second input box, a preset trigger event corresponding to the second input box is triggered. A callback function that corresponds to the trigger event corresponding to the second input box is invoked. Content in the second input box is checked according to a third check rule corresponding to the second input box. Prompt information corresponding to the second input box is displayed on the form page according to a result of the checking the content in the second input box. In this way, different checking methods may be selectively used for an input box in a form, improving form checking flexibility.

Optionally, the processor is further configured to:
monitor a second input box in the form, where the second input box is an input box in the form, and the first input box and the second input box are different input boxes; and when detecting that an input focus leaves the second input box, trigger a preset trigger event corresponding to the second input box;
the check unit is further configured to:
   invoke a callback function that corresponds to the trigger event corresponding to the second input box, and check content in the second input box according to a third check rule corresponding to the second input box; and
   the display unit is further configured to:
      display, on the form page according to a result of the checking the content in the second input box, prompt information corresponding to the second input box.

Optionally, the first check rule is used to check any one or more of a character type, a character length, or a format of the content in the first input box;
the second check rule is used to check validity of the content in each input box in the form; and
the third check rule is used to check any one or more of a character type, a character length, or a format of the content in the second input box.

Optionally, a first check is specifically: checking the content in the first input box by using a plug-in that is preset in a browser and that is corresponding to the form;
a second check is specifically: sending the content in each input box in the form to a server, so that the server checks the validity of the content in each input box; and
a third check is specifically: checking the content in the second input box by using the plug-in that is preset in the browser and that is corresponding to the form.

In this way, content such as a character type, a character length, or a format can be quickly checked, and the validity of the content in each input box in the form is then checked after the form is submitted, thereby improving form checking efficiency.

Optionally, the processor is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed a preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

In this way, a user can clearly know, from a form filling screen, why content entered by the user into the input box does not meet a requirement. Therefore, the user can modify the content in the input box in a more targeted manner, improving the correct input box filling efficiency of the user.

Optionally, the processor is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

Optionally, the operation action changing the content in the first input box specifically refers to any one of the following content: entering content into the input box, deleting content in the input box, cutting content in the input box, or pasting content into the input box.

In the embodiments of the present invention, a first input box in a form is monitored, where the first input box is an input box in the form. When it is detected that an operation action changing content in the first input box occurs in the first input box, a preset trigger event corresponding to the first input box is triggered. A callback function that corresponds to the trigger event corresponding to the first input box is invoked. The content in the first input box is checked according to a first check rule corresponding to the first input box. Prompt information corresponding to the first input box is displayed on a form page according to a result of the checking the content in the first input box. When a submit command for submitting the form is received, content in each input box in the form and a check result that is obtained by checking each input box according to a second check rule corresponding to the input box are obtained. The form is processed according to the check result obtained by checking each input box. In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1a is a schematic diagram of a complete form filled in by a user in a method in which checking is performed after the user fills in an entire form according to the Background;
FIG. 1b is a schematic diagram of FIG. 1a after a check is performed;
FIG. 1c is a schematic diagram of filling in a form in a method for checking an input box when an input focus leaves the input box according to the Background;
FIG. 1d is a schematic diagram of FIG. 1c after a check is performed;
FIG. 1e is a diagram of a system architecture applicable to an embodiment of the present invention;
FIG. 2 is a schematic flowchart of a form checking method according to an embodiment of the present invention;
FIG. 2a, FIG. 2b, and FIG. 2c are schematic diagrams of examples of form filling effects when a form checking method provided in an embodiment of the present invention is applied;
FIG. 3 is a schematic structural diagram of a form checking apparatus according to an embodiment of the present invention; and
FIG. 4 is a schematic structural diagram of another form checking apparatus according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

A term user equipment (User Equipment, UE for short) in the embodiments of the present invention may include a handheld device, an in-vehicle device, a wearable device, or a computing device that provides a radio communication function; another processing device connected to a wireless modem; or user equipment in various forms, including a mobile station (Mobile Station, MS for short), a terminal (Terminal), terminal equipment (Terminal Equipment), and the like. For example, the user equipment may be a personal digital assistant (Personal Digital Assistant, PDA for short), a mobile phone terminal, or a personal computer (personal computer, PC for short) terminal. For ease of description, in this application, user equipment is used for short.

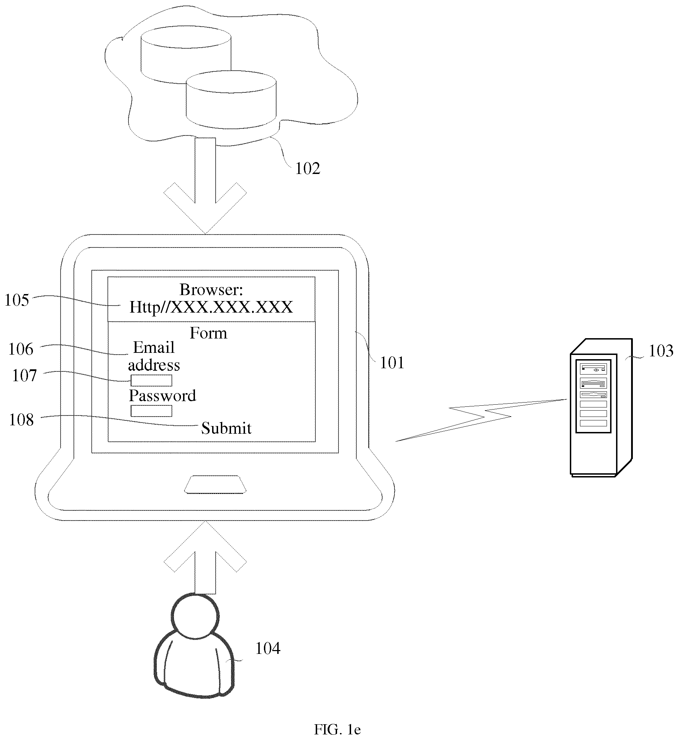

FIG. 1e is a diagram of an example of a system architecture applicable to an embodiment of the present invention. As shown in FIG. 1e, user equipment 101 and a server 103 connected to the user equipment are included.

The user equipment 101 includes a local storage area 102, used to store local information, for example, a plug-in used for checking.

A user 104 may open a browser 105 in the user equipment 101, and open a page for filling in a form 106. In a specific implementation, each website includes a form, and the form usually includes an input box and a selection box. The input box is used by the user to enter content into the input box. The selection box provides several drop-down options. The user selects one option from the provided drop-down options. A method provided in the embodiments of the present invention is applicable to a check on content in the input box in the form. In FIG. 1e, the form 106 includes multiple input boxes 107, for example, an email address input box and a password input box that are shown in FIG. 1e. The user 104 may enter content into the input boxes in the form 106. The form 106 further includes a Submit button 108 at the bottom. When the user clicks the Submit button, the user equipment 101 may send the form to a server corresponding to the browser, so that the server processes the form.

For example, when the user registers an email address on the Yahoo (yahoo) website, a page opened by the user for registering a Yahoo email address includes a form. The user enters an email address name XXX@yahoo.com into a corresponding email address name input box in the form, enters a password 123456 into a corresponding email address password input box, and clicks a Submit button. Then the user equipment sends the content in the input boxes to the server, so that the server successfully registers an email address for the user when the server verifies that the information is valid information.

In the foregoing example, when the user enters content into the input box in the form, the content in the input box needs to be checked. The embodiments of the present invention provide a form checking method, to check content in an input box in a form, so as to improve the form filling efficiency for a user.

The form checking method provided in the embodiments of the present invention is applied to a local storage area corresponding to a browser, and may be specifically implemented by using a plug-in. A programmer writes a corresponding plug-in for a form by using various functions. When a user opens a form page by using the browser, a plug-in, corresponding to the form, in the browser automatically begins to run, and when detecting a corresponding trigger event, invokes a corresponding callback function for processing.

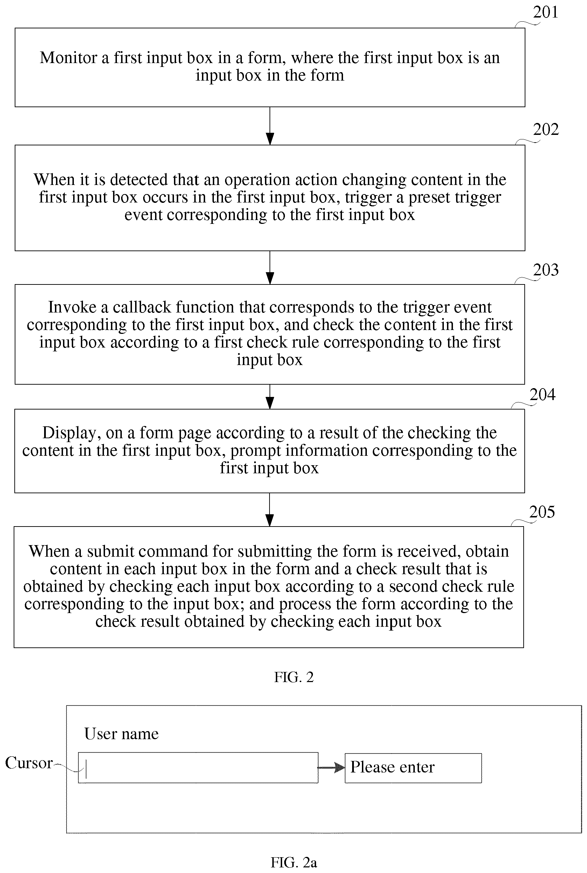

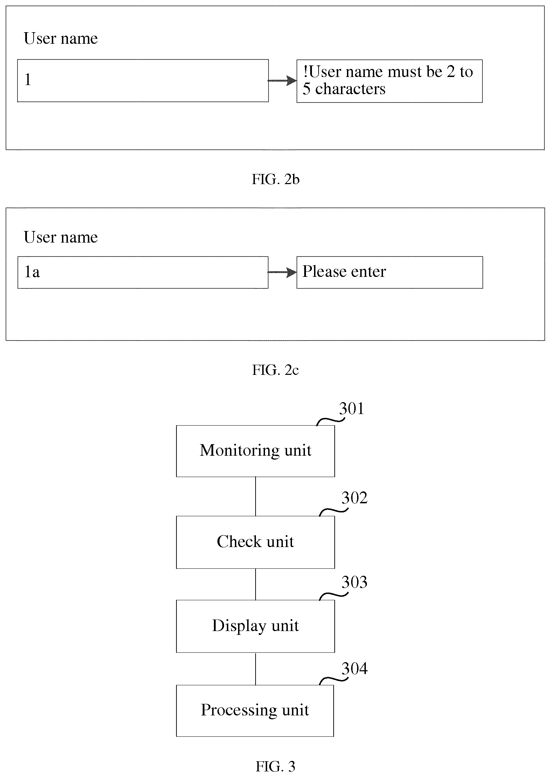

Based on the foregoing description, FIG. 2 shows a schematic flowchart of a form checking method according to an embodiment of the present invention. As shown in FIG. 2, the method includes the following steps.

Step 201. Monitor a first input box in a form, where the first input box is an input box in the form.

Step 202. When it is detected that an operation action changing content in the first input box occurs in the first input box, trigger a preset trigger event corresponding to the first input box.

Step 203. Invoke a callback function that corresponds to the trigger event corresponding to the first input box, and check the content in the first input box according to a first check rule corresponding to the first input box.

Step 204. Display, on a form page according to a result of the checking the content in the first input box, prompt information corresponding to the first input box.

Step 205. When a submit command for submitting the form is received, obtain content in each input box in the form and a check result that is obtained by checking each input box according to a second check rule corresponding to the input box; and process the form according to the check result obtained by checking each input box.

In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

In step 202, optionally, the operation action changing the content in the first input box specifically refers to any one of the following content:
entering content into the input box, deleting content in the input box, cutting content in the input box, or pasting content into the input box.

That is, entering content into the input box by the user, deleting content in the input box by the user, modifying content in the input box by the user, and the like all belong to changing the content in the input box.

In a specific implementation, one form includes multiple input boxes. Therefore, for a second input box different from the first input box, optionally, the second input box in the form is monitored. The second input box is an input box in the form. The first input box and the second input box are different input boxes. When it is detected that an input focus leaves the second input box, a preset trigger event corresponding to the second input box is triggered. A callback function that corresponds to the trigger event corresponding to the second input box is invoked. Content in the second input box is checked according to a third check rule corresponding to the second input box. Prompt information corresponding to the second input box is displayed on the form page according to a result of the checking the content in the second input box.

In this way, different checking methods may be selectively used for an input box in a form, improving form checking flexibility.

Optionally, when it is detected that the input focus leaves the first input box, the preset trigger event corresponding to the first input box is triggered again. The callback function that corresponds to the trigger event corresponding to the first input box is invoked. The content in the first input box is checked according to the first check rule corresponding to the first input box. The prompt information corresponding to the first input box is displayed on the form page according to the result of the checking the content in the first input box.

Optionally, the first check rule is used to check any one or more of a character type, a character length, or a format of the content in the first input box; the second check rule is used to check validity of the content in each input box in the form; and the third check rule is used to check any one or more of a character type, a character length, or a format of the content in the second input box.

Optionally, the first check is specifically: checking the content in the first input box by using a plug-in that is preset in a browser and that is corresponding to the form; the second check is specifically: sending the content in each input box in the form to a server, so that the server checks the validity of the content in each input box; and the third check is specifically: checking the content in the second input box by using the plug-in that is preset in the browser and that is corresponding to the form.

In step 205, there may also be another implementation for the obtaining, when a submit command for submitting the form is received, content in each input box in the form and a check result that is obtained by checking each input box according to a second check rule corresponding to the input box. For example, the second check rule and a database are both in a local storage area. In this case, when receiving the submit command for submitting the form, a form checking apparatus obtains the content in each input box in the form, obtains the second check rule corresponding to each input box, checks the validity of the content in each input box according to information stored in a local database, and then processes the form according to the check result obtained by checking each input box.

For example, the first check rule is: the character type in the first input box is any one or a combination of a digit, a letter, or a character, a maximum character length is six characters, and the format is required to be XXX@XXX.com. In this case, when it is detected that an operation action changing the content in the first input box occurs in the first input box, the character type, the character length, and the format of the content in the first input box are checked by using the plug-in that is preset in the browser and that is corresponding to the form.

The third check rule is: the character type in the second input box is any one or a combination of a digit, a letter, or a character, and a maximum character length is six characters. In this case, when it is detected that the input focus leaves the second input box, the character type and the character length of the content in the second input box are checked by using the plug-in that is preset in the browser and that is corresponding to the form.

The second check rule is checking the validity of the content in each input box in the form. For example, in an email address registration form, the server checks whether a character string same as content in an email address input box in the form already exists in the database. If there is such a character string in the database, it indicates that an account of the email address has been registered, and the user needs to modify the content in the input box. A specific implementation process is as follows: The user clicks a Submit button, and user equipment sends the content in each input box in the form to the server, so that the server checks the content in each input box in the form and returns a check result, so as to process the form according to the check result obtained by checking each input box. Specifically, when checking the validity of the content in each input box in the form succeeds, a form page may display a message corresponding to a successful check, such as "Registration succeeded", or "You have logged in successfully". When checking validity of content in an input box in the form fails, the form page may display a message corresponding to a check failure, such as "Registration failed", or "Please fill in the form again".

In step 203, optionally, the invoking a callback function that corresponds to the trigger event corresponding to the first input box, and checking the content in the first input box according to a first check rule corresponding to the first input box specifically includes:
when the first check rule is used to check the character type of the content in the first input box, invoking the callback function that corresponds to the trigger event triggered by the first input box, and checking the content in the first input box according to the first check rule corresponding to the first input box; and when it is determined that the character type of the content in the first input box belongs to any one or more of preset character types, determining that the checking the character type of the content in the first input box succeeds; otherwise, determining that the checking the character type of the content in the first input box fails;
when the first check rule is used to check the character length of the content in the first input box, invoking the callback function that corresponds to the trigger event triggered by the first input box, and checking the content in the first input box according to the first check rule corresponding to the first input box; and when it is determined that the character length of the content in the first input box does not exceed the preset character length, determining that the checking the character length of the content in the first input box succeeds; otherwise, determining that the checking the character length of the content in the first input box fails; and
when the first check rule is used to check the format of the content in the first input box, invoking the callback function that corresponds to the trigger event triggered by the first input box, and checking the content in the first input box according to the first check rule corresponding to the first input box; and when it is determined that the format of the content in the first input box matches a preset format, determining that the checking the format of the content in the first input box succeeds; otherwise, determining that the checking the format of the content in the first input box fails.

In step 204, optionally, the displaying, according to a check result, prompt information corresponding to the check result specifically includes:
if the check result is that the check fails, displaying prompt information indicating an incorrect input; or if the check result is that the check succeeds, displaying prompt information indicating a correct input.

Optionally, the prompt information indicating an incorrect input includes indication information used to indicate that content entered into the input box does not comply with a preset rule. For example, the prompt information indicating an incorrect input may be "Currently entered content does not meet a requirement".

Optionally, the prompt information indicating an incorrect input includes indication information used to indicate correct content that needs to be entered into the input box and that complies with a preset rule. For example, if the preset rule requires to enter an email address into a current input box, the prompt information indicating an incorrect input may be "Content currently required to be entered should be in a format of XXX@XXX.com". Alternatively, if the preset rule requires to enter content of six to eight characters into a current input box, the prompt information indicating an incorrect input may be "six to eight characters need to be entered into the current input box".

In step 204, optionally, the displaying, on a form page according to a result of the checking the content in the first input box, prompt information corresponding to the first input box specifically includes:
when it is determined that the checking the character type of the content in the first input box succeeds, displaying, on the form page, prompt information used to indicate that the checking the character type of the content in the first input box succeeds; or when it is determined that the checking the character type of the content in the first input box fails, displaying, on the form page, prompt information used to indicate that the checking the character type of the content in the first input box fails;
when it is determined that the checking the character length of the content in the first input box succeeds, displaying, on the form page, prompt information used to indicate that the checking the character length of the content in the first input box succeeds; or when it is determined that the checking the character length of the content in the first input box fails, displaying, on the form page, prompt information used to indicate that the checking the character length of the content in the first input box fails; and
when it is determined that the format of the content in the first input box is the preset format, displaying, on the form page, prompt information used to indicate that the format of the content in the first input box is the preset format; or when it is determined that the format of the content in the first input box is not the preset format, displaying, on the form page, prompt information used to indicate that the format of the content in the first input box is not the preset format.

Optionally, a large amount of repeated code needs to be written to implement a check on a single form. Therefore, the entire-form checking method is implemented by using a plug-in library implemented by using a JavaScript language. A plug-in implementation principle for the form checking method is as follows:
When an operation action changing content in an input box occurs in the input box, a corresponding check function is invoked to perform checking, and corresponding prompt information is displayed. To implement such a check system, first, when the operation action changing the content in the input box occurs, a corresponding event needs to be triggered. Second, when the event is triggered, a corresponding callback function needs to be invoked to perform checking. Therefore, a check plug-in mainly includes a monitoring function used to "monitor an input box in a form", and a check function used to "check current content in the input box according to a preset rule corresponding to the input box". Optionally, the check plug-in further includes a function for performing overall checking on all content of a form after a user filling in the entire form.

The monitoring function that is included in the check plug-in and that is used to "monitor an input box in a form" may be monitorContentChange(){}. A function parameter may be a document object model (Document Object Model, DOM for short) object of the input box.

The monitoring function mainly has a function of triggering a content change (contentChange) event when an operation action changing content in an input box occurs in the input box. The contentChange event may be a keyup (keyup) event, a keydown (keydown) event, a mouseup (mouseup) event, a mousedown (mousedown) event, or another event in jQuery, and is bound to a jQuery object corresponding to the input box. The triggering a contentChange event when an operation action changing content in an input box occurs in the input box is specifically: adding, to the input box, various jQuery events changing the content in the input box, and triggering, during an event callback, the contentChange event corresponding to the input box. The jQuery events changing the content in the input box may be a keyboard input event, a keyboard deletion event, a keyboard paste event, a keyboard cut event, a mouse cut event, and a mouse paste event.

An implementation model of program code of the monitoring function is as follows:
$("input box DOM").on("event name",
function(evt){ this.trigger("contentChange", [evt]) });

The check function used to "check current content in the input box according to a preset rule corresponding to the input box" may be unify Valid(){}. The function is used to add a content change event callback function to the input box, check current content in the input box by using the event callback function and according to a preset rule, and display, according to a check result, prompt information corresponding to the check result. The preset rule may be preset by a programmer.

In this embodiment of the present invention, the foregoing form checking method is used for the first input box in the supported form, and a prior-art method for checking content in an input box only when an input focus leaves the input box is used for the second input box. In this case, a blur event callback function is added to an input box that uses the method for performing checking when the input focus leaves. Content in the input box is checked by using the event callback function and according to a preset rule, and prompt information corresponding to a check result is displayed according to the check result. Checking triggered by a blur event remains the same as checking in the prior art, to improve commonality of this checking method, so that this method is applicable to checking in various scenarios.

In this embodiment of the present invention, a form may be checked as a whole after the entire form is filled in. A function for implementing overall checking of a form may be formValid(){}. A function parameter is a form DOM. The function mainly has a function of implementing checking of an entire form. Each input box DOM is obtained according to the form DOM, and content change events and blur events of all input boxes are traversed and triggered. For a code model, refer to the implementation model of the program code of the monitoring function.

A form checking apparatus implements a form checking function by invoking a function in a form checking plug-in. First, a monitoring function monitorContentChange() of contentChange is invoked, and an input box DOM is input as a parameter. Second, an input box checking function unifyValid() is invoked. Parameters are current content and a preset rule of the input box DOM. A parameter of the preset rule may be an identifier, already encapsulated in a library, of the preset rule, or may be a self-defined identifier of the preset rule. The preset rule further includes an implementation function ({key:value}format). In this embodiment of the present invention, each input box filled in by a user is checked in real time. After completing an entire form, the user clicks a Submit button, to submit the completed form. In this case, a form checking apparatus invokes an overall form checking function formValidQ, and an input parameter is a form DOM.

A specific application effect of this embodiment of the present invention is described by using an example. FIG. 2a, FIG. 2b, and FIG. 2c are schematic diagrams of examples of form filling effects when a form checking method provided in an embodiment of the present invention is applied. As shown in FIG. 2a, a user name input box in a form is monitored. If a user clicks the input box, it is detected that content in the input box changes. In this case, current content in the input box includes only a cursor. The current content, that is, "the cursor", in the input box is checked according to a preset rule corresponding to the input box. The preset rule may be: "two to five characters need to be entered into the input box". Prompt information corresponding to a check result is displayed according to the check result. For example, the prompt information corresponding to the check result is "Please enter".

As shown in FIG. 2b, if the user enters one character "1", it is detected that the content in the input box changes. In this case, the current content in the input box includes only one character, and checking is triggered. A length of the current character in the input box does not comply with the preset rule. Prompt information "User name must be 2 to 5 characters" corresponding to a check result is displayed, and the prompt information includes an "!", to indicate that the content in the current input box does not meet a requirement.

As shown in FIG. 2c, if the user enters a second character "a", it is detected that the content in the input box changes. In this case, the current content in the input box includes two characters "1a", and this complies with the preset rule. Prompt information "Please enter" corresponding to a check result is displayed. "!" used to indicate that content in the current input box does not meet a requirement is removed from the prompt information.

It can be seen from the foregoing content that in this embodiment of the present invention, a first input box in a form is monitored, where the first input box is an input box in the form. When it is detected that an operation action changing content in the first input box occurs in the first input box, a preset trigger event corresponding to the first input box is triggered. A callback function that corresponds to the trigger event corresponding to the first input box is invoked. The content in the first input box is checked according to a first check rule corresponding to the first input box. Prompt information corresponding to the first input box is displayed on a form page according to a result of the checking the content in the first input box. When a submit command for submitting the form is received, content in each input box in the form and a check result that is obtained by checking each input box according to a second check rule corresponding to the input box are obtained. The form is processed according to the check result obtained by checking each input box. In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

FIG. 3 is a schematic structural diagram of an example of a form checking apparatus according to an embodiment of the present invention.

Based on a same concept, an embodiment of the present invention provides a form checking apparatus. As shown in FIG. 3, the apparatus includes a monitoring unit 301, a check unit 302, a display unit 303, and a processing unit 304.

This embodiment of the present invention provides a form checking apparatus, including:
a monitoring unit, configured to: monitor a first input box in a form, where the first input box is an input box in the form; and when it is detected that an operation action changing content in the first input box occurs in the first input box, trigger a preset trigger event corresponding to the first input box;
a check unit, configured to: invoke a callback function that corresponds to the trigger event corresponding to the first input box, and check the content in the first input box according to a first check rule corresponding to the first input box;
a display unit, configured to display, on a form page according to a result of the checking the content in the first input box, prompt information corresponding to the first input box; and
a processing unit, configured to: when a submit command for submitting the form is received, obtain content in each input box in the form and a check result that is obtained by checking each input box according to a second check rule corresponding to the input box; and process the form according to the check result obtained by checking each input box.

Optionally, the monitoring unit is further configured to:
monitor a second input box in the form, where the second input box is an input box in the form, and the first input box and the second input box are different input boxes; and when detecting that an input focus leaves the second input box, trigger a preset trigger event corresponding to the second input box.

The check unit is further configured to:
invoke a callback function that corresponds to the trigger event corresponding to the second input box, and check content in the second input box according to a third check rule corresponding to the second input box.

The display unit is further configured to:
display, on the form page according to a result of the checking the content in the second input box, prompt information corresponding to the second input box.

Optionally, the first check rule is used to check any one or more of a character type, a character length, or a format of the content in the first input box.

The second check rule is used to check validity of the content in each input box in the form.

The third check rule is used to check any one or more of a character type, a character length, or a format of the content in the second input box.

Optionally, a first check is specifically: checking the content in the first input box by using a plug-in that is preset in a browser and that is corresponding to the form.

A second check is specifically: sending the content in each input box in the form to a server, so that the server checks the validity of the content in each input box.

A third check is specifically: checking the content in the second input box by using the plug-in that is preset in the browser and that is corresponding to the form.

Optionally, the check unit is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed a preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

Optionally, the display unit is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

Optionally, the operation action changing the content in the first input box specifically refers to any one of the following content:
entering content into the input box, deleting content in the input box, cutting content in the input box, or pasting content into the input box.

It can be seen from the foregoing content that in this embodiment of the present invention, a first input box in a form is monitored, where the first input box is an input box in the form. When it is detected that an operation action changing content in the first input box occurs in the first input box, a preset trigger event corresponding to the first input box is triggered. A callback function that corresponds to the trigger event corresponding to the first input box is invoked. The content in the first input box is checked according to a first check rule corresponding to the first input box. Prompt information corresponding to the first input box is displayed on a form page according to a result of the checking the content in the first input box. When a submit command for submitting the form is received, content in each input box in the form and a check result that is obtained by checking each input box according to a second check rule corresponding to the input box are obtained. The form is processed according to the check result obtained by checking each input box. In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

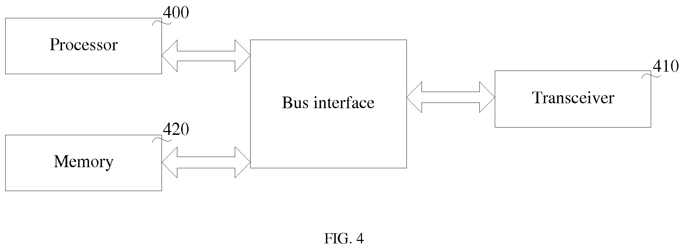

FIG. 4 is a schematic structural diagram of an example of a form checking apparatus according to an embodiment of the present invention.

Based on a same concept, an embodiment of the present invention provides a form checking apparatus. As shown in FIG. 4, the apparatus includes a processor 400, a memory 420, and a transceiver 410.

The processor is configured to read a program in the memory, to perform the following process:

The processor is configured to:
monitor a first input box in a form, where the first input box is an input box in the form; and when it is detected that an operation action changing content in the first input box occurs in the first input box, trigger a preset trigger event corresponding to the first input box;
invoke a callback function that corresponds to the trigger event corresponding to the first input box, and check the content in the first input box according to a first check rule corresponding to the first input box;
display, on a form page according to a result of the checking the content in the first input box, prompt information corresponding to the first input box; and
when a submit command for submitting the form is received, obtain content in each input box in the form and a check result that is obtained by checking each input box according to a second check rule corresponding to the input box; and process the form according to the check result obtained by checking each input box.

Optionally, the processor is further configured to:
monitor a second input box in the form, where the second input box is an input box in the form, and the first input box and the second input box are different input boxes; and when detecting that an input focus leaves the second input box, trigger a preset trigger event corresponding to the second input box;
the check unit is further configured to:
   invoke a callback function that corresponds to the trigger event corresponding to the second input box, and check content in the second input box according to a third check rule corresponding to the second input box; and
   the display unit is further configured to:
display, on the form page according to a result of the checking the content in the second input box, prompt information corresponding to the second input box.

Optionally, the first check rule is used to check any one or more of a character type, a character length, or a format of the content in the first input box.

The second check rule is used to check validity of the content in each input box in the form.

The third check rule is used to check any one or more of a character type, a character length, or a format of the content in the second input box.

Optionally, a first check is specifically: checking the content in the first input box by using a plug-in that is preset in a browser and that is corresponding to the form.

A second check is specifically: sending the content in each input box in the form to a server, so that the server checks the validity of the content in each input box.

A third check is specifically: checking the content in the second input box by using the plug-in that is preset in the browser and that is corresponding to the form.

Optionally, the processor is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed a preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

Optionally, the processor is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

Optionally, the operation action changing the content in the first input box specifically refers to any one of the following content: entering content into the input box, deleting content in the input box, cutting content in the input box, or pasting content into the input box.

A bus architecture may include any quantity of interconnected buses and bridges, and specifically, connects circuits that are of one or more processors represented by the processor and of a memory represented by the memory. The bus architecture may further connect various other circuits of a peripheral device, a voltage regulator, a power management circuit, and the like. This is well known in the art, and therefore, no further description is provided in this specification. A bus interface provides an interface. The transceiver may be multiple components, including a transmitter and a transceiver, and providing units for communicating with various other apparatuses on a transmission medium. The processor is responsible for managing the bus architecture and general processing. The memory may store data used when the processor performs an operation.

It can be seen from the foregoing content that in this embodiment of the present invention, a first input box in a form is monitored, where the first input box is an input box in the form. When it is detected that an operation action changing content in the first input box occurs in the first input box, a preset trigger event corresponding to the first input box is triggered. A callback function that corresponds to the trigger event corresponding to the first input box is invoked. The content in the first input box is checked according to a first check rule corresponding to the first input box. Prompt information corresponding to the first input box is displayed on a form page according to a result of the checking the content in the first input box. When a submit command for submitting the form is received, content in each input box in the form and a check result that is obtained by checking each input box according to a second check rule corresponding to the input box are obtained. The form is processed according to the check result obtained by checking each input box. In this way, checking can be performed in real time in an input process of a user, and the input box is checked immediately when the content in the first input box changes, thereby ensuring that the user can make a correct input into the first input box at a time and then switch an input focus. This improves the form filling efficiency, reduces a form filling time for the user, and avoids a prior-art problem of frequent switching of an input focus performed when the user completes input of an input box and moves an input focus away from the input box, and then finds a content error in the input box and returns to the input box to reenter information.

Persons skilled in the art should understand that the embodiments of the present invention may be provided as a method, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A form checking method, comprising the following steps:
monitoring a first input box in a form, wherein the first input box is an input box in the form;
when it is detected that an operation action changing content in the first input box occurs in the first input box, triggering a preset trigger event corresponding to the first input box;
invoking a callback function that corresponds to the trigger event corresponding to the first input box, and checking the content in the first input box according to a first check rule corresponding to the first input box;
displaying, on a form page according to a result of the checking the content in the first input box, prompt information corresponding to the first input box;
when a submit command for submitting the form is received, obtaining content in each input box in the form and a check result that is obtained by checking each input box according to a second check rule corresponding to the input box; and
processing the form according to the check result obtained by checking each input box.

2. The method according to claim 1, before the receiving a submit command for submitting the form, further comprising:
monitoring a second input box in the form, wherein the second input box is an input box in the form, and the first input box and the second input box are different input boxes;
when it is detected that an input focus leaves the second input box, triggering a preset trigger event corresponding to the second input box;
invoking a callback function that corresponds to the trigger event corresponding to the second input box, and checking content in the second input box according to a third check rule corresponding to the second input box; and
displaying, on the form page according to a result of the checking the content in the second input box, prompt information corresponding to the second input box.

3. The method according to claim 2, wherein the first check rule is used to check any one or more of a character type, a character length, or a format of the content in the first input box;
the second check rule is used to check validity of the content in each input box in the form; and
the third check rule is used to check any one or more of a character type, a character length, or a format of the content in the second input box.

4. The method according to claim 3, wherein the first check is specifically: checking the content in the first input box by using a plug-in that is preset in a browser and that is corresponding to the form;
the second check is specifically: sending the content in each input box in the form to a server, so that the server checks the validity of the content in each input box; and
the third check is specifically: checking the content in the second input box by using the plug-in that is preset in the browser and that is corresponding to the form.

5. The method according to claim 3 or 4, wherein the invoking a callback function that corresponds to the trigger event corresponding to the first input box, and checking the content in the first input box according to a first check rule corresponding to the first input box specifically comprises:
when the first check rule is used to check the character type of the content in the first input box, invoking the callback function that corresponds to the trigger event triggered by the first input box, and checking the content in the first input box according to the first check rule corresponding to the first input box; and when it is determined that the character type of the content in the first input box belongs to any one or more of preset character types, determining that the checking the character type of the content in the first input box succeeds; otherwise, determining that the checking the character type of the content in the first input box fails;
when the first check rule is used to check the character length of the content in the first input box, invoking the callback function that corresponds to the trigger event triggered by the first input box, and checking the content in the first input box according to the first check rule corresponding to the first input box; and when it is determined that the character length of the content in the first input box does not exceed the preset character length, determining that the checking the character length of the content in the first input box succeeds; otherwise, determining that the checking the character length of the content in the first input box fails; and
when the first check rule is used to check the format of the content in the first input box, invoking the callback function that corresponds to the trigger event triggered by the first input box, and checking the content in the first input box according to the first check rule corresponding to the first input box; and when it is determined that the format of the content in the first input box matches a preset format, determining that the checking the format of the content in the first input box succeeds; otherwise, determining that the checking the format of the content in the first input box fails.

6. The method according to claim 5, wherein the displaying, on a form page according to a result of the checking the content in the first input box, prompt information corresponding to the first input box specifically comprises:
when it is determined that the checking the character type of the content in the first input box succeeds, displaying, on the form page, prompt information used to indicate that the checking the character type of the content in the first input box succeeds; or when it is determined that the checking the character type of the content in the first input box fails, displaying, on the form page, prompt information used to indicate that the checking the character type of the content in the first input box fails;
when it is determined that the checking the character length of the content in the first input box succeeds, displaying, on the form page, prompt information used to indicate that the checking the character length of the content in the first input box succeeds; or when it is determined that the checking the character length of the content in the first input box fails, displaying, on the form page, prompt information used to indicate that the checking the character length of the content in the first input box fails; and
when it is determined that the format of the content in the first input box is the preset format, displaying, on the form page, prompt information used to indicate that the format of the content in the first input box is the preset format; or when it is determined that the format of the content in the first input box is not the preset format, displaying, on the form page, prompt information used to indicate that the format of the content in the first input box is not the preset format.

7. The method according to any one of claims 1 to 6, wherein the operation action changing the content in the first input box specifically refers to any one of the following content:
entering content into the input box, deleting content in the input box, cutting content in the input box, or pasting content into the input box.

8. A form checking apparatus, comprising:
a monitoring unit, configured to: monitor a first input box in a form, wherein the first input box is an input box in the form; and when it is detected that an operation action changing content in the first input box occurs in the first input box, trigger a preset trigger event corresponding to the first input box;
a check unit, configured to: invoke a callback function that corresponds to the trigger event corresponding to the first input box, and check the content in the first input box according to a first check rule corresponding to the first input box;
a display unit, configured to display, on a form page according to a result of the checking the content in the first input box, prompt information corresponding to the first input box; and
a processing unit, configured to: when a submit command for submitting the form is received, obtain content in each input box in the form and a check result that is obtained by checking each input box according to a second check rule corresponding to the input box; and process the form according to the check result obtained by checking each input box.

9. The apparatus according to claim 8, wherein the monitoring unit is further configured to:
monitor a second input box in the form, wherein the second input box is an input box in the form, and the first input box and the second input box are different input boxes; and when detecting that an input focus leaves the second input box, trigger a preset trigger event corresponding to the second input box;
the check unit is further configured to:
invoke a callback function that corresponds to the trigger event corresponding to the second input box, and check content in the second input box according to a third check rule corresponding to the second input box; and
the display unit is further configured to:
display, on the form page according to a result of the checking the content in the second input box, prompt information corresponding to the second input box.

10. The apparatus according to claim 9, wherein the first check rule is used to check any one or more of a character type, a character length, or a format of the content in the first input box;
the second check rule is used to check validity of the content in each input box in the form; and
the third check rule is used to check any one or more of a character type, a character length, or a format of the content in the second input box.

11. The apparatus according to claim 10, wherein the first check is specifically: checking the content in the first input box by using a plug-in that is preset in a browser and that is corresponding to the form;
the second check is specifically: sending the content in each input box in the form to a server, so that the server checks the validity of the content in each input box; and
the third check is specifically: checking the content in the second input box by using the plug-in that is preset in the browser and that is corresponding to the form.

12. The apparatus according to claim 10 or 11, wherein the check unit is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed the preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

13. The apparatus according to claim 12, wherein the display unit is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

14. The apparatus according to any one of claims 8 to 13, wherein the operation action changing the content in the first input box specifically refers to any one of the following content:
entering content into the input box, deleting content in the input box, cutting content in the input box, or pasting content into the input box.

15. A form checking apparatus, comprising:
a processor, configured to:
monitor a first input box in a form, wherein the first input box is an input box in the form; and when it is detected that an operation action changing content in the first input box occurs in the first input box, trigger a preset trigger event corresponding to the first input box;
invoke a callback function that corresponds to the trigger event corresponding to the first input box, and check the content in the first input box according to a first check rule corresponding to the first input box;
display, on a form page according to a result of the checking the content in the first input box, prompt information corresponding to the first input box; and
when a submit command for submitting the form is received, obtain content in each input box in the form and a check result that is obtained by checking each input box according to a second check rule corresponding to the input box; and process the form according to the check result obtained by checking each input box.

16. The apparatus according to claim 15, wherein the processor is further configured to:
monitor a second input box in the form, wherein the second input box is an input box in the form, and the first input box and the second input box are different input boxes; and when detecting that an input focus leaves the second input box, trigger a preset trigger event corresponding to the second input box;
the check unit is further configured to:
invoke a callback function that corresponds to the trigger event corresponding to the second input box, and check content in the second input box according to a third check rule corresponding to the second input box; and
the display unit is further configured to:
display, on the form page according to a result of the checking the content in the second input box, prompt information corresponding to the second input box.

17. The apparatus according to claim 16, wherein the first check rule is used to check any one or more of a character type, a character length, or a format of the content in the first input box;
the second check rule is used to check validity of the content in each input box in the form; and
the third check rule is used to check any one or more of a character type, a character length, or a format of the content in the second input box.

18. The apparatus according to claim 17, wherein the first check is specifically: checking the content in the first input box by using a plug-in that is preset in a browser and that is corresponding to the form;
the second check is specifically: sending the content in each input box in the form to a server, so that the server checks the validity of the content in each input box; and
the third check is specifically: checking the content in the second input box by using the plug-in that is preset in the browser and that is corresponding to the form.

19. The apparatus according to claim 17 or 18, wherein the processor is specifically configured to:
when the first check rule is used to check the character type of the content in the first input box, invoke the callback function that corresponds to the trigger event triggered by the first input box, and check the content in the first input box according to the first check rule corresponding to the first input box; and when it is determined that the character type of the content in the first input box belongs to any one or more of preset character types, determine that the checking the character type of the content in the first input box succeeds; otherwise, determine that the checking the character type of the content in the first input box fails;
when the first check rule is used to check the character length of the content in the first input box, invoke the callback function that corresponds to the trigger event triggered by the first input box, and check the content in the first input box according to the first check rule corresponding to the first input box; and when it is determined that the character length of the content in the first input box does not exceed the preset character length, determine that the checking the character length of the content in the first input box succeeds; otherwise, determine that the checking the character length of the content in the first input box fails; and
when the first check rule is used to check the format of the content in the first input box, invoke the callback function that corresponds to the trigger event triggered by the first input box, and check the content in the first input box according to the first check rule corresponding to the first input box; and when it is determined that the format of the content in the first input box matches a preset format, determine that the checking the format of the content in the first input box succeeds; otherwise, determine that the checking the format of the content in the first input box fails.

20. The apparatus according to claim 19, wherein the processor is specifically configured to:
when it is determined that the checking the character type of the content in the first input box succeeds, display, on the form page, prompt information used to indicate that the checking the character type of the content in the first input box succeeds; or when it is determined that the checking the character type of the content in the first input box fails, display, on the form page, prompt information used to indicate that the checking the character type of the content in the first input box fails;
when it is determined that the checking the character length of the content in the first input box succeeds, display, on the form page, prompt information used to indicate that the checking the character length of the content in the first input box succeeds; or when it is determined that the checking the character length of the content in the first input box fails, display, on the form page, prompt information used to indicate that the checking the character length of the content in the first input box fails; and
when it is determined that the format of the content in the first input box is the preset format, display, on the form page, prompt information used to indicate that the format of the content in the first input box is the preset format; or when it is determined that the format of the content in the first input box is not the preset format, display, on the form page, prompt information used to indicate that the format of the content in the first input box is not the preset format.

21. The apparatus according to any one of claims 15 to 20, wherein the operation action changing the content in the first input box specifically refers to any one of the following content:
entering content into the input box, deleting content in the input box, cutting content in the input box, or pasting content into the input box.
